# EUROPEAN PATENT APPLICATION

(11) **EP 1 950 981 A1**
(43) Date of publication of application: **30.07.2008**
(21) Application number: 07425031.7
(22) Date of filing: 23.01.2007
(51) Int. Cl.: H04N 13/00

(54) **The three-dimensional vision**

(71) Applicant: Masia, Filippo, 07100 Sassari (IT)
(72) Inventor: Masia, Filippo, 07100 Sassari (IT)

(57) **Abstract**

This technique allows the three-dimensional vision of any movie DVD or TV programme without need of particular technique of resumption.

The carrying out of the project requires two LCD microscreens put in proper Glasses and linked to a hardware-software equipment. The three-dimensional vision of any movie is obtained using the frames from the same movie: while the left eye sees a frame of the movie the right eye must sees the subsequent frame.

In the event of a TV programme, the proper hardware-software equipment introduce a slight delay (1/25 out of a second) between the image perceived by the right eye and the one seen by the left eye.

The result comes perceived as a real Three-dimensional Vision as the human brain perfectly elaborates the two images and supplies who observes the feeling of own depth of the real three-dimensional vision.

## Description

### TECHNICAL FIELD

Video-optical

### BACKGROUND ART

Inefficient, expensive and difficult use, a particular technique of resumption with two television-cameras was necessary.

### DISCLOSURE OF INVENTION

1. This technique allows the three-dimensional vision of any movie DVD or TV programme without need of particular technique of resumption.
2. MOVIE.
   The three-dimensional vision of any movie DVD is obtained using the frames from the same movie, with this technique: while the left eye sees a frame of the movie the right eye must sees the subsequent frame, in this mode:
   while the left eye sees the frame n.1 the right eye sees the frame n.2 ...while the left eye sees the frame n.2 the right eye sees the frame n.3 ...while the left eye sees the frame n.3 the right eye sees the frame n.4 ...etc etc.
3. The result comes perceived as a real Three-dimensional Vision as the human brain perfectly elaborates the two images and supplies who observes the feeling of own depth of the three-dimensional vision.
4. If anyone wants to test this result (to watch movie DVD three-dimensional on a Personal Computer) what is necessary is:
   - a PC software which must show on the monitor two subsequent frames from the movie, side by side;
   - a device similar to binoculars, provided with a system for focalization, laid in front of the PC monitor as to force the right eye to see the right image only and the left eye see the left one only.
5. TV PROGRAMME.
   For the Three-dimensional vision of any TV programme it is besides necessary a proper hardware-software equipment able to introduce a slight delay (1/25 out of a second) between the image perceived by the right eye and the one seen by the left eye.

### BEST MODE FOR CARRYING OUT THE INVENTION

The carrying out of the project requires two LCD microscreens put in proper Glasses and linked to a hardware-software equipment able to carry out the functions above described. These Glasses allow to watch three-dimensional DVDs or TV programme.

## Claims

1. CLAIM 1. (DD3) is **characterized in that**: the three-dimensional vision is obtained using the frames from the same movie, or TV programme, without need of particular technique of resumption.

2. The technique as claimed in Claim 1 for achieving the three-dimensional effect, through the separate vision, for each eye, of subsequent frames of the same movie.

3. The technique as claimed in Claim 1 for achieving the three-dimensional effect (TV programme) by a gap of time inserted in between the image perceived by the left eye and the one perceived by the right eye.
